# EUROPÄISCHE PATENTANMELDUNG

(11) **EP 3 660 341 A1**
(43) Veröffentlichungstag der Anmeldung: **03.06.2020**
(21) Anmeldenummer: 19211888.3
(22) Anmeldetag: 27.11.2019
(51) Int. Cl.: F16B 23/00, F16B 37/12, F16B 5/02, E04F 13/08, E06B 1/60, E04B 1/38, F16B 13/00, F16B 25/00, F16B 35/04

(54) **MONTAGESET ZUR VERANKERUNG EINES HOLZANBAUTEILS AN EINEM GEBÄUDEABSCHNITT**

(30) Priorität: 29.11.2018 DE 102018130234
(71) Anmelder: Adolf Würth GmbH & Co. KG, 74653 Künzelsau (DE)
(72) Erfinder: Küenzlen, Jürgen, 71570 Oppenweiler (DE)
(74) Vertreter: Dilg, Haeusler, Schindelmann Patentanwaltsgesellschaft mbH

(57) **Zusammenfassung**

Montageset zur Verankerung eines Holzanbauteils (1) an einem Gebäudeabschnitt (3) mit einem Gebäudeanker (5) zur Verankerung in dem Gebäudeabschnitt (3), wobei der Gebäudeanker (5) einen Verankerungsabschnitt (5V) zur Verankerung in dem Gebäudeabschnitt (3) und einen Hülsenabschnitt (5H) mit einem Hülsenverbindungsgewinde (5HV) aufweist, und mit einer Hülse (7) mit einem Hülseninnengewinde (7HIG) zum Aufschrauben auf das Hülsenverbindungsgewinde (5HV) und mit einem Hülsenaußengewinde (7HAG), insbes. einem Holzgewinde, zum Schrauben in das Holzbauteil (1) sowie mit einem Antrieb bzw. Abtrieb (7A) zum Drehantreiben der Hülse (7).

Fig. 3

## Beschreibung

Die Erfindung betrifft ein Montageset zur Verankerung eines Holzanbauteils an einem Gebäudeabschnitt sowie eine damit erstellte Befestigungsanordnung.

Beim Erstellen von Gebäuden stellt sich häufig das Problem einer stabilen Verbindung von einem Gebäude zu einem Holzanbauteil. Dies kann bspw. beim Bauen eines Carports an einem Haus der Fall sein, bei dem ein massiver Holzbalken horizontal an einer Seitenwand etwas oberhalb der Decke des Erdgeschosses befestigt wird. An diesem Holzbalken wird in der Folge ein Schrägdach für den Carport befestigt, das dann von der Hauswand kommend nach außen hin abfällt. Ein anderer Anwendungsfall ist die Befestigung einer Fußpfette eines Dachstuhls am Ringanker eines Hauses.

Es ist bekannt, eine Betonschraube zur Befestigung von Holzanbauteilen an Gebäuden zu verwenden, s. bspw. DE102006024440B4: Ein Schraubanker zum Befestigen von Holzbauteilen auf Beton hat einen Schaft mit einem ersten Gewindeabschnitt mit einem Holzschraubengewinde zum Einschrauben in Holz und einem zweiten Gewindeabschnitt mit einem Betonschraubengewinde zum Einschrauben in Beton, wobei das Holzschraubengewinde eine etwas geringere Steigung als die Steigung des Betongewindes hat und der Durchmesser des Holzschraubengewindes größer ist als der Durchmesser des Betonschraubengewindes. Durch die verschiedenen Gewindesteigungen soll das Holzbauteil an das Gebäude gedrückt werden.

Ein Nachteil bei dieser Befestigung ist, dass zum Austausch des Holzbauteils der Schraubanker komplett aus dem Gebäude geschraubt werden muss.

Aufgabe der vorliegenden Erfindung ist es daher, ein einfaches Montageset zur Befestigung von Holzanbauteilen an Gebäuden anzugeben.

Die Aufgabe wird erfindungsgemäß durch ein Montageset zur Verankerung eines Holzanbauteils an einem Gebäudeabschnitt sowie eine Befestigungsanordnung mit dem Holzanbauteil, dem Gebäude sowie dem Montageset gelöst.

Der Gebäudeanker ist vorteilhaft eine Gewindestange zum Einkleben, eine Betonschraube mit Hülsenverbindungsgewinde und Antrieb oder ein Kunststoffdübel mit Stockschraube mit Hülsenverbindungsgewinde und Schraubantrieb.

Bevorzugt besteht die Hülse aus Metall, insbesondere aus Stahl.

Die Hülse weist bevorzugt eine axiale Länge von 3-15 cm und einen Außendurchmesser, einschließlich Außengewinde, von 10-30mm auf.

Das Hülseninnengewinde (HIG) ist vorteilhaft ein metrisches Gewinde, insbesondere ein Normgewinde, und das Hülsenaußengewinde (7HAG) ist vorteilhaft ein Holzgewinde, insbesondere ein Normgewinde, um eine Berechnung für zugelassene Befestigungen zu ermöglichen.

Alternativ kann das Hülseninnengewinde (7HIG) eine hohe Gewindesteigung, insbesondere eine Gewindehöhe größer 3mm, aufweisen, um eine schnelle Montage der Hülse auf dem Gebäudeanker zu ermöglichen.

Die Antriebsaufnahme der Hülse zur Verbindung mit einem insbesondere maschinellen Drehwerkzeug kann ein Innensechskant oder Schlitz sein.

Bei der Befestigungsanordnung weist das Holzanbauteil vorteilhaft eine Dicke von 5-25cm, insbesondere von 5-20cm, auf.

Bei Befestigungsanordnung kann der Gebäudeabschnitt ein Wandabschnitt, ein Deckenabschnitt oder ein Fußbodenabschnitt sein.

Der Gebäudeabschnitt besteht vorteilhaft aus Beton, einem Mauerwerk, einem Naturstein oder aus Holz.

Weitere Merkmale, Einzelheiten und Vorzüge der Erfindung ergeben sich aus den Ansprüchen und der nachfolgenden Beschreibung bevorzugter Ausführungsformen sowie anhand der Zeichnung. Es zeigen:
- Fig. 1: Seitenansichten von verschiedenen Gebäudeankern zur Verwendung in bzw. als Teil von einem erfindungsgemäßen Montageset,
- Fig. 2: a) eine Draufsicht, b) eine Seitenansicht und c) eine Querschnittsansicht einer Hülse zur Verwendung in bzw. als Teil von einem erfindungsgemäßen Montageset,
- Fig. 3: eine Querschnittsansicht einer erfindungsgemäßen Befestigungsanordnung mit einem Gebäudeabschnitt sowie eine Holzanbauteil, wobei das Holzanbauteil an dem Gebäudeabschnitt mit Hilfe eines erfindungsgemäßen Montagesets befestigt ist, und
- Fig. 4: die Anordnung gemäß Fig. 3, wobei jedoch das Holzanbauteil in einem Abstand zu dem Gebäudeabschnitt montiert ist.

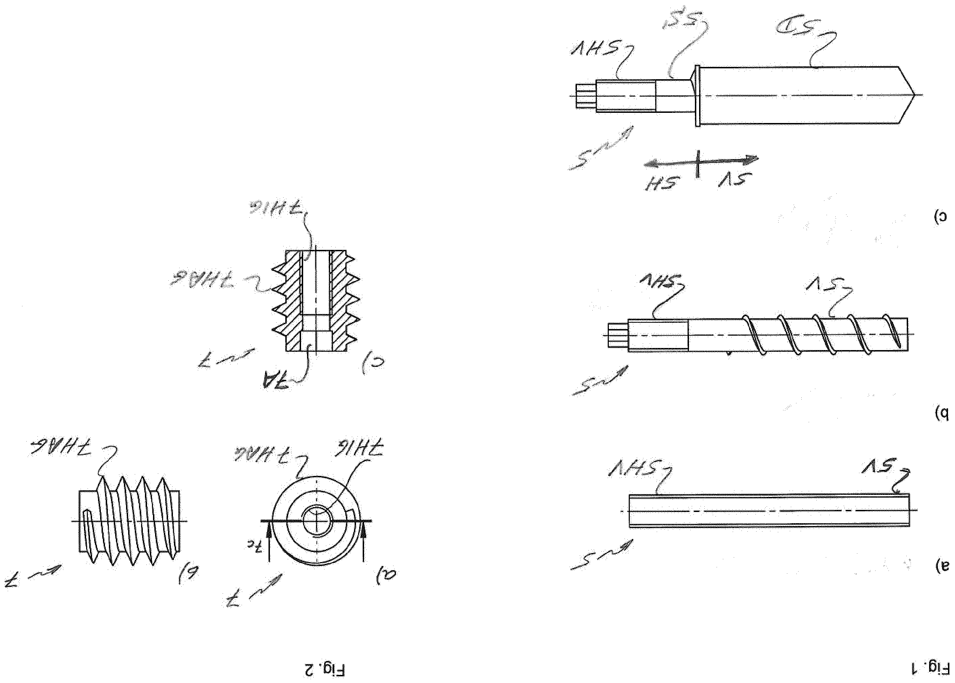

Fig. 1 zeigt verschiedene Gebäudeanker 5, die exemplarisch Teil eines erfindungsgemäßen Montagesets sein können. Fig. 1a) zeigt eine herkömmliche Gewindestange, die in einen Gebäudeabschnitt eingeklebt werden kann, bspw. mittels eines Mörtels oder eines 2K-Klebstoffs. Fig. 1b) zeigt einen Schraubanker, der ein Betongewinde an einem Ende sowie ein metrisches Gewinde an einem gegenüberliegenden Ende aufweist, wobei ein Antrieb an dem dem Betongewinde gegenüberliegenden Ende angeordnet ist, um den Schraubanker mittels eines insbesondere maschinellen Drehwerkzeugs in einen Gebäudeabschnitt aus Beton zu schrauben. Fig. 1c) zeigt einen Kunststoffdübel 5D, in den eine Stockschraube 5S mit durchgehendem metrischen Gewinde geschraubt ist, wobei die Stockschraube an einem freien Ende noch einen Antrieb aufweist, um die Stockschraube mittels eines insbesondere maschinellen Drehwerkzeugs in den Dübel zu schrauben, der in einem Gebäudeabschnitt aus Beton, Mauerwerk oder Naturstein steckt.

Der Gebäudeanker 5 weist somit immer einen Verankerungsabschnitt 5V zur Verankerung in einem Gebäudeabschnitt 3 auf: In Fig. 1a) ist dies ein Abschnitt der Gewindestange, die in den Gebäudeabschnitt 3 eingeklebt wird. In Fig. 1b) ist dies das zum Einschrauben in den Gebäudeabschnitt 3 vorgesehene Betongewinde. In Fig. 1c) ist dies der zum Einstecken in den Gebäudeabschnitt 3 vorgesehene Dübel sowie der in den Dübel geschraubte Abschnitt der Stockschraube.

Der Gebäudeanker 5 weist somit immer einen Hülsenabschnitt 5H zur Verbindung mit einer Hülse 7 gemäß Fig. 2 auf. Vorliegend ist dies in den drei Varianten der Figuren 1a) bis 1c) ein metrisches Hülsenverbindungsgewinde 5HV am dem dem Verankerungsabschnitt 5V gegenüberliegenden Ende des Gebäudeankers 5.

Der Gebäudeanker 5 kann - an dem dem Verankerungsabschnitt 5V gegenüberliegenden Ende - einen Antrieb aufweisen, um den Gebäudeanker mittels eines insbesondere maschinellen Drehwerkzeugs, bspw. einer Bohrmaschine, in dem Gebäudeabschnitt 3 anzuordnen, wie bspw. bei der Schraubanker nach Fig. 1b) oder der Stockschraube nach Fig. 1c).

Fig. 2 zeigt verschiedene Ansichten der Hülse 7 zur Verwendung mit einem der Gebäudeanker 5 der Fig. 1. Die Hülse 7 besteht vorliegend aus Stahl und weist ein axiales Durchgangsloch mit einem metrischen Hülseninnengewinde 7HIG auf, das passend zu dem Hülsenverbindungsgewinde 5HV gebildet ist. Ferner weist die Hülse eine Antriebsaufnahme 7A an einem axialen Ende zum insbesondere maschinellen Drehantrieben der Hülse 7 auf. Die Antriebsaufnahme 7A ist vorliegend als Innensechskant gebildet. Die Hülse 7 weist an ihrer Außenseite ein Hülsenaußengewinde 7HAG in Form eines Holzgewindes gemäß Norm auf.

Mindestens ein Gebäudeanker 5 gemäß Fig. 1 mit einer Hülse 7 gemäß Fig. 2 bilden ein Montageset zur Befestigung eines Holzanbauteils 1 an einem Gebäudeabschnitt 3. Zur Befestigung eines Holzanbauteils 1 an einem Gebäudeabschnitt 3 werden jedoch in Regel mehrere Gebäudeanker 5 mit zugehörigen Hülsen 7 notwendig sein. Die Gebäudeanker 5 eines Montagsets zur Montage eines Holzbauteils 1 an einem Gebäudeabschnitt 3 können dabei alle gleich sein, bspw. eine gewisse Anzahl von Gewindestangen gemäß Fig. 1a), können jedoch auch verschieden sein, bspw. eine gewisse Anzahl von Gewindestangen gemäß Fig. 1a) und eine gewisse Anzahl von Schraubankern gemäß Fig. 1b). Letzteres kann insbesondere dann sinnvoll sein, wenn der Gebäudeabschnitt 3 entlang der Länge, entlang der das Holzanbauteil 1 befestigt werden soll, aus verschiedenen Materialien besteht, bspw. in einem ersten Abschnitt aus Mauerwerk und einem zweiten Abschnitt aus Beton.

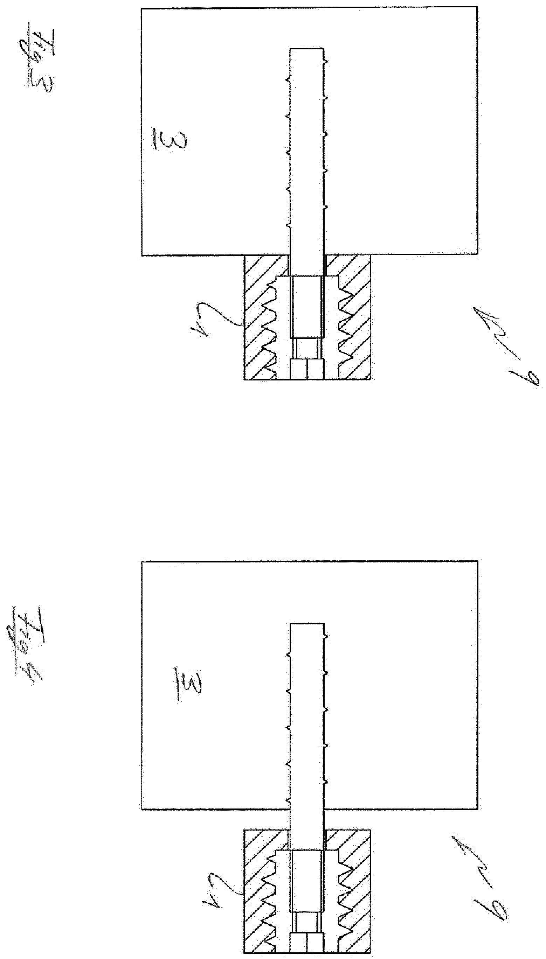

In Fig. 3 ist eine Befestigungsanordnung 9 gezeigt. In einem Gebäudeabschnitt 3 aus Beton ist ein Gebäudeanker 5 in Form einer Gewindestange gemäß Fig. 1a) eingeklebt, d.h. der in Fig. 3 in den Gebäudeabschnitt 3 geklebte Abschnitt der Gewindestange 5 bildet den Verankerungsabschnitt 5V. Das Holzanbauteil 1 ist auf den Hülsenabschnitt 5H des Gebäudeankers 5 gesteckt, wobei die Hülse 7 zum einen mit ihrem Hülseninnengewinde 7HIG auf das Hülsenverbindungsgewinde 5HV geschraubt ist und zum anderen mit ihrem Hülsenaußengewinde 7HAG in das Holzanbauteil 1 geschraubt ist.

Die Befestigungsanordnung 9 wurde, wie folgend beschrieben, erstellt: zunächst wurde fest gelegt, entlang welchen Bereichs des Gebäudeabschnitts 3 ein Holzanbauteil 1 befestigt werden soll. Anschließend wurde ein Holzanbauteil 1 entsprechender Länge bereitgestellt. Folgend wurde berechnet, wie viele und welche Befestigungspunkte und an welchen Stellen diese im Gebäudeabschnitt 3 in dem Gebäudeabschnitt 3 notwendig sind, um das Holzanbauteil 1 - unter Berücksichtigung der ggfls. von diesem noch zu tragenden Lasten - notwendig sind. Anschließend wurden die entsprechenden Bohrlöcher für die Befestigungspunkte in dem Gebäudeabschnitt 3 erstellt und die Gebäudeanker 5 in den Bohrlöchern befestigt. Anschließend wurde das Holzanbauteil 1 mit entsprechend vorbereiteten Durchgangslöchern auf die Hülsenabschnitte 5H der Gebäudeanker gesteckt. Abschließend wurden die Hülsen 7 auf die Hülsenverbindungsgewinde 5HV geschraubt, wodurch das Holzanbauteil 1 an dem Gebäudeabschnitt 3 befestigt ist.

Um das Holzanbauteil 1 zu tauschen, wird wie folgt vorgegangen: Die Hülsen 7 werden von den Gebäudeankern 5 geschraubt. Anschließend wird ein neues Holzanbauteil 1 auf die Hülsenabschnitte 5H der Gebäudeanker 5 gesteckt und die Hülsen 7 erneut auf die Gebäudeanker 5 geschraubt, wie oben beschrieben. Für einen Austausch des Holzanbauteils 1 können die Gebäudeanker 5 somit im Gebäudeabschnitt 3 verbleiben.

In der Fig. 3 ist das Holzanbauteil 1 direkt an dem Gebäudeabschnitt 3 angeordnet. Es ist jedoch möglich, das Holzanbauteil 1 in einem Abstand von dem Gebäudeabschnitt 3 anzuordnen, wie in Fig. 4 gezeigt. Das erfindungsgemäße Montageset eignet sich somit auch für eine Abstandsmontage und ermöglicht eine spannungsfreie Montage des Holzanbauteils 1 an dem Gebäudeabschnitt 3.

Die Fig. 2c) zeigt die Hülse 7 mit einem Innengewinde 7HIG und einem mit Abstand dazu angeordneten Antrieb 7A. In einer alternativen Ausführungsform verläuft das Innengewinde 7HIG durchgängig von dem in Fig. 2c) oberen Ende der Hülse 7 zu dem unteren Ende der Hülse 7. Um in dieser Varianten einen Antrieb 7A bereit zu stellen, könnte im Bereich des Innengewindes 7HIG an einem Ender der Hülse an diametral gegenüberliegenden Seiten ein Schlitz vorgesehen sein, um einen Eingriff für ein Setzwerkzeug zu ermöglichen. In einer weiteren Ausführungsform könnte an einem Ende der Hülse 7 ein Außensechskant vorgesehen sein.

### Bezugszeichenliste

- 1: Holzanbauteil
- 3: Gebäudeabschnitt
- 5: Gebäudeanker
- 5D: Dübel
- 5H: Hülsenabschnitt
- 5HV: Hülsenverbindungsgewinde
- 5S: Stockschraube
- 5V: Verankerungsabschnitt zur Verankerung in dem Gebäudeabschnitt
- 7: Hülse
- 7A: Antriebsaufnahme
- 7HAG: Hülsenaußengewinde
- 7HIG: Hülseninnengewinde
- 9: Befestigungsanordnung

## Patentansprüche

1. Montageset zur Verankerung eines Holzanbauteils (1) an einem Gebäudeabschnitt (3) mit einem Gebäudeanker (5) zur Verankerung in dem Gebäudeabschnitt (3), wobei der Gebäudeanker (5) einen Verankerungsabschnitt (5V) zur Verankerung in dem Gebäudeabschnitt (3) und einen Hülsenabschnitt (5H) mit einem Hülsenverbindungsgewinde (5HV) aufweist, und mit einer Hülse (7) mit einem Hülseninnengewinde (7HIG) zum Aufschrauben auf das Hülsenverbindungsgewinde (5HV) und mit einem Hülsenaußengewinde (7HAG), insbes. einem Holzgewinde, zum Schrauben in das Holzbauteil (1) sowie mit einem Antrieb bzw. Abtrieb (7A) zum Drehantreiben der Hülse (7).

2. Montageset nach Anspruch 1, **dadurch gekennzeichnet, dass** der Gebäudeanker (5) eine Gewindestange zum Einkleben, eine Betonschraube mit Hülsenverbindungsgewinde und Antrieb oder ein Kunststoffdübel mit Stockschraube mit Hülsenverbindungsgewinde und Schraubantrieb ist.

3. Montageset nach Anspruch 1 oder 2, **dadurch gekennzeichnet, dass** die Hülse (7) aus Metall, insbesondere aus Stahl, besteht.

4. Montageset nach einem der vorangehenden Ansprüche, **dadurch gekennzeichnet, dass** die Hülse (7) eine axiale Länge von 3-15 cm und einen Außendurchmesser, einschließlich Außengewinde, von 10-30mm aufweist.

5. Montageset nach einem der vorangehenden Ansprüche, **dadurch gekennzeichnet, dass** das Hülseninnengewinde (HIG) ein metrisches Gewinde, insbesondere Normgewinde, und das Hülsenaußengewinde (7HAG) ein Holzgewinde, insbesondere ein Normgewinde ist, um eine Berechnung für zugelassene Befestigungen zu ermöglichen.

6. Montageset nach einem der Ansprüche 1 bis 4, **dadurch gekennzeichnet, dass** das Hülseninnengewinde (7HIG) eine hohe Gewindesteigung, insbesondere eine Gewindehöhe größer 3mm, hat, um eine schnelle Montage der Hülse (7) auf dem Gebäudeanker (5) zu ermöglichen.

7. Montageset nach einem der vorangehenden Ansprüche, **dadurch gekennzeichnet, dass** die Antriebsaufnahme (7A) der Hülse (7) zur Verbindung mit einem insbesondere maschinellen Drehwerkzeug ein Innensechskant oder Schlitz ist.

8. Befestigungsanordnung (9) mit einem Gebäudeabschnitt (3) und einem Holzanbauteil (1) und einem Set nach einem der vorangehenden Ansprüche, wobei der Verankerungsabschnitt (5V) in dem Gebäudeabschnitt (3) verankert ist, die Hülse (7) auf den Gebäudeanker (5) geschraubt ist, indem das Hülseninnengewinde (7HIG) auf das Hülsenverbindungsgewinde (5HV) geschraubt ist, und die Hülse (7) in das Holzanbauteil (1) geschraubt ist, indem das Hülsenaußengewinde (7HAG) in das Holzanbauteil (1) geschraubt ist.

9. Befestigungsanordnung nach dem vorangehenden Anspruch, **dadurch gekennzeichnet, dass** das Holzanbauteil (1) eine Dicke von 5-25cm, insbesondere von 5-20cm, aufweist.

10. Befestigungsanordnung nach einem der vorangehenden Ansprüche, **dadurch gekennzeichnet, dass** der Gebäudeabschnitt (3) ein Wandabschnitt, ein Deckenabschnitt oder ein Fußbodenabschnitt ist.

11. Befestigungsanordnung nach einem der vorangehenden Ansprüche, **dadurch gekennzeichnet, dass** der Gebäudeabschnitt (3) aus Beton, einem Mauerwerk, einem Naturstein oder aus Holz besteht.
